Europäisches Patentamt

European Patent Office

Office européen des brevets

(19)

(11) Veröffentlichungsnummer: **0 159 001 B1**

(12) # EUROPÄISCHE PATENTSCHRIFT

(45) Veröffentlichungstag der Patentschrift: **06.03.91**

(51) Int. Cl.⁵: **F16F 1/44**, F16M 7/00

(21) Anmeldenummer: **85104526.0**

(22) Anmeldetag: **15.04.85**

(54) **Höhenverstellbare Aufstell- und Dämpfungsvorrichtung.**

(30) Priorität: **19.04.84 DE 3414888**
**05.12.84 DE 3444237**

(43) Veröffentlichungstag der Anmeldung:
**23.10.85 Patentblatt 85/43**

(45) Bekanntmachung des Hinweises auf die
Patenterteilung:
**06.03.91 Patentblatt 91/10**

(84) Benannte Vertragsstaaten:
**AT BE CH DE FR GB IT LI LU NL SE**

(56) Entgegenhaltungen:
**EP-A- 0 084 857**
**CH-A- 333 633**
**CH-A- 515 430**
**FR-A- 2 116 011**
**US-A- 3 323 764**

**DUBBEL**, Taschenbuch für den Maschinenbau, S. 112, 4b

(73) Patentinhaber: **Munz, Erich**
**Weststrasse 11**
**W-5204 Lohmar 1 - Geber(DE)**

(72) Erfinder: **Munz, Erich**
**Weststrasse 11**
**W-5204 Lohmar 1 - Geber(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**W-6450 Hanau 7(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine höhenverstellbare Aufstell- und Dämpfungsvorrichtung gemäß Oberbegriff des Hauptanspruches.

Aufstell- und Dämpfungsvorrichtungen der genannten Art sind nach der DE-U-74 35 170 bekannt. Hierbei handelt es sich um eine Vorrichtung, bei der zwecks Nivellierungsausgleich die Gewindespindel (normale Maschinenschraube) gegen die Deckplatte des elastischen Bodenkörpers unter der Auflast des betreffenden Gegenstandes, der auf der Tragplatte der Vorrichtung ruht, verspannt werden kann. Dafür muß der betreffende Gegenstand im betreffenden Bereich seiner Bodenplatte mit einer entsprechenden Bohrung und die Tragplatte mit einer durchgehenden Innengewindebohrung versehen sein. Da solche Vorrichtungen in der Regel als Unterlagen für vibrierende Gegenstände benutzt werden, ist es notwendig, die Gewindespindel mit einer Kontermutter und Zwischenlagescheiben zu versehen, um die Spindel und die Tragplatte gegen den Fundamentplattenrand des Gegenstandes fest verspannen zu können, da sich sonst die ganze Vorrichtung unter Einwirkung ständiger Vibrationen selbsttätig verstellen kann. Diese vorbekannte Vorrichtung verlangt also eine spezielle Ausbildung des Aufsetzbereiches des betreffenden Gegenstandes, um diese Vorrichtung überhaupt anbringen zu können. Für das Einstellen der Spindel ist Lösen und Anziehen der Kontermutter erforderlich. Außerdem muß der elastische Bodenkörper mit seiner Deckplatte in bezug auf die glockenförmige Tragplatte in dieser kolbenartig geführt sein. Auf einem ähnlichen Prinzip und dem Erfordernis entsprechender Bodenplattengestaltung des betreffenden Gegenstandes beruht eine ähnliche Aufstell- und Dämpfungsvorrichtung nach der DE-U- 69 26 024, wobei jedoch der mit Durchgriffsloch versehene Bodenrand des Gegenstandes unter Zwischenlage einer Unterlegscheibe als Tragplatte lediglich zwischen zwei Muttern eingespannt wird. Im Falle eines aufgesetzten und vibrierenden Gegenstandes, dessen Schwingungen es zu dämpfen gilt, müßte hierbei sogar jeder Mutter eine Kontermutter zugeordnet werden, wenn sich die ganze Halterung der Vorrichtung unter Vibrationseinwirkung nicht lösen bzw. verstellen soll. Abgesehen vom erforderlichen Anpassungsaufwand an der Bodenplatte bzw. dem bodenseitigen Teil des betreffenden Gegenstandsgehäuses, um die in der Regel vier Aufstellelemente überhaupt anbringen zu können, müssen also bei den vorbekannten Aufstellvorrichtungen Kontermuttern vorgesehen und beim Einstellen mit dem eigentlichen Einstellelement (Spindel) manipuliert werden, wobei letztlich immer die Möglichkeit besteht, daß sich das Ganze unter der Einwirkung von Gegenstandsvibrationen lockert und damit selbsttätig verstellen kann. Bei den beiden vorbekannten Vorrichtungen handelt es sich also letztlich um Aufstell- und Dämpfungselemente, die am Gegenstand selbst angebracht werden müssen, d.h., ein problemloses Aufsetzen auf solche Aufstell- und Dämpfungsvorrichtungen, die vororientiert einfach am Boden plaziert wurden, ist bei diesen vorbekannten Vorrichtungen praktisch nicht möglich.

Der Erfindung liegt demgemäß die Aufgabe zugrunde, Aufstell- und Dämpfungsvorrichtungen der genannten Art dahingehend zu verbessern, daß man ohne Kontermuttern auskommt und für die Zuordnung der Vorrichtung im Auflagebereich bzw. im Bereich der Bodenplatte des betreffenden Gegenstandes keinerlei besondere Anschlußmaßnahmen, wie Bohrungsanbringungen und Anbringung von Eingriffsausnehmungen getroffen werden müssen und wobei der Verstellvorgang beschleunigt vollziehbar sein soll.

Diese Aufgabe ist mit einer Vorrichtung der eingangs genannten Art nach der Erfindung durch die im Kennzeichen des Hauptanspruches angeführten Merkmale gelöst.

Vorteilhafte Weiterbildungen und praktische Ausführungsformen ergeben sich nach den Unteransprüchen. Soweit es sich darin um bekannte Merkmale handelt, wird dafür Schutz nur im Rahmen der vorliegenden Erfindung beansprucht.

Verstellspindeln mit gegenläufigen Gewinden sind zwar nach der FR-A -867 029 bekannt, bei dieser vorbekannten Vorrichtung handelt es sich aber nicht um eine Aufstell- und Dämpfungsvorrichtung der gattungsgemäßen Art, sondern um eine Riemenspannvorrichtung für den Abtriebsriemen eines Elektromotors, mit der also relativ große Stellbewegungen vollzogen werden müssen, um einen zunächst schlaff aufgelegten Riemen durch Vestellen des ganzen Motors in Spannstellung bringen und damit die Motorleistung auf die Welle übertragen zu können. Abgesehen davon weist diese Vorrichtung keinerlei Dämpfungselemente auf, sondern die Bodenplatte ist fest auf einem Tragsockel für den Motor installiert, der seinerseits fest auf einer Tragplatte der Vorrichtung sitzt.

Derartige Gewindetriebe mit gegenläufigen Gewinden sind ubrigens auch nach Dubbel, 16. Aufl., Seite I 12, Bild 4b, bekannt. Hierbei handelt es sich um eine Hubvorrichtung, bei der eine kleine, mit Drehsicherungsverzahnung versehene Tragplatte drehbar auf der Innenspindel angeordnet ist, die somit nur einer etwaigen Höhenanpassung dient, um dann mit der Außenhülse, die gegenläufiges Gewinde aufweist, endgültig zwischen Boden und Gegenstand verspannt zu werden.

Um eine reine Nivelliereinrichtung, und zwar ohne jegliche Dämpfungselemente handelt es sich beim Gegenstand der DE-A-31 00 595. Gegenläufige Gewinde sind hierbei nicht vorgesehen, sondern sog. Differenzgewinde, d.h. Gewinde mit gleichgerichteter, aber unterschiedlicher

Steigung, und zwar um am Kraftübertragungspunkt bezüglich des Hubes nur die Steigungsdifferenz pro Umdrehung wirksam werden zu lassen.

Ebenfalls eine Nivelliereinrichtung betrifft die CH-A-501 163, die drei Stellspindeln aufweist, die in der gewünschten Stellung mit Kontermuttern in bezug auf Gewindebüchsen festgelegt werden können. Gegenläufige Gewinde sind nicht vorhanden. Eine Druckplatte ist lediglich auf die Enden der drei Gewindespindeln lose aufgelegt.

Die erdingungsgemäße Lösung besteht demgegenüber in einer Vorrichtung, auf die (in der Regel werden es vier sein) der betreffende Gegenstand nur aufgesetzt zu werden braucht, die aber andererseits in sich verstellbar ist. Bezüglich der erfindungswesentlichen maßgabe, daß die Tragplatte oberseitig mit einem Gegenstandsanschlag, wie insbesondere Winkelanschlagleiste, versehen sein soll, ist darauf hinzuweisen, daß eine solche oberseitige Tragplattenausbildung und zwar nach der DE-A-25 06 836 bekannt ist. Diese Maßgabe erhält aber im vorliegenden Zusammenhang eine zusätzliche Bedeutung, was noch näher erläutert wird, abgesehen davon, daß für den vorliegenden Fall die Tragplatte selbst nicht mehr mit einem elastischen Bodenkörper versehen ist, sondern mit einem Aufnahmegewinde für die Gewindespindel. Durch die spezielle Ausbildung der Tragplatte, nämlich mit Anordnung eines Gegenstandsanschlages, kann sich die Tragplatte in bezug auf die Gegenstandsgrundplatte nicht mehr verdrehen, d.h. , die Tragplatte übernimmt gewissermaßen selbst die Funktion einer Kontermutter bzw. bedarf keiner Festlegung mehr durch eine Kontermutter. Damit wird auch eine notwendige Höhennivellierung der ganzen Vorrichtung denkbar einfach und zwar selbst dann, wenn die Auflast groß sein sollte. Durch die erfindungsgemäße Ausbildung wird erreicht, daß sich bei einer einfachen Drehung der Spindel die damit via Gewinden verbundene Deck- und Tratplatte je nach Drehrichtung der Spindel gleichzeitig weiter voneinander distanzieren bzw. umgekehrt gleichzeitig einander nähern, was natürlich die Handhabung der Vorrichtung vereinfacht und den Einstellvorgang beschleunigt. Außerdem ist ein Verstellhilfsmittel denkbar einfach mittig an der Spindel bzw. an dem an der Spindel dafür vorgesehenen Stellelement anzusetzen. Da am Einstellvorgang gleichzeitig die beiden gegenläufigen Gewinde beteiligt sind, kann die Vorrichtung auch weniger hoch ausgebildet werden, weil sich der gesamte Verstellweg auf die beiden Gewinde verteilt.

Die höhenverstellbare Aufstell- und Dämpfungsvorrichtung wird nachfolgend anhand der zeichnerischen Darstellung von Ausführungsbeispielen näher erläutert.

Es zeigt schematisch

Fig. 1    einen Schnitt durch die Vorrichtung;

Fig. 2    einen Schnitt durch die Deckplatte mit Grundkörper in besonderer Ausführungsform;

Fig. 3    im Schnitt die Tragplatte in besonderer Ausführungsform;

Fig. 4    einen Schnitt durch eine besondere Ausführungsform;

Fig.5     perspektivisch eine weitere besondere Ausführungsform und

Fig.6     eine Draufsicht auf die Tragplatte.

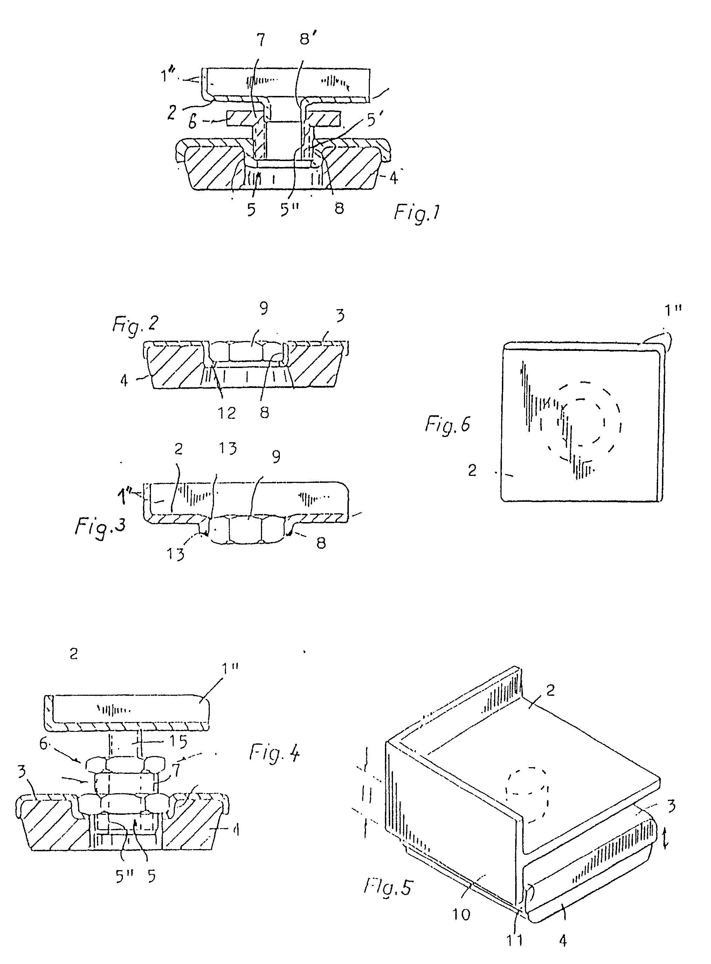

Wie aus Fig. 1 erkennbar, ist die Gewindespindel 5 in Form einer Gewindebüchse 7 mit gegenläufigen Gewinden 5', 5" ausgebildet, wobei sich an der Gewindebüchse ein Stellelement 6 in Form eines Sechskantbundes befindet, an dem ein Schraubensehlüssen mit passender Maulweite angesetzt werden kann, um die Spindel 5 zu verdrehen, wobei sich je nach Drehrichtung die Gegenstandstragplatte 2 zur Deckplatte 3 des Grundkörpers 4 weiter distanziert bzw. nähert, da die Gewindebüchse 7 mit ihrem Gewinde 5" ebenfalls auf eine entsprechende Gewindeaufnahme der Deckplatte 3 aufgeschraubt ist. Bei der Gewindeaufnahme der Gegenstandstragplatte 2 und der der Deckplatte 3 kann es sich einfach um angeschweißte Innengewindehülsen handeln. Vorteilhaft sind jedoch die Tragplatte 2 und die Deckplatte 3 gemäß Fig. 2, 3 als gezogene Preßteile ausgebildet, wobei aus den entsprechend bemessenen Blechzuschnitten beim Preßvorgang gleichzeitig die Ringkragen 8 mit ausgeformt werden. Bei entsprechender Blechstärke können natürlich die Innengewinde direkt in die Ringkragen 8 eingeschnitten werden. Um diese Ringkragen 8 und damit den gesamten Blechzuschnitt nicht entsprechend dick halten zu müssen, können aber auch in die Preßteile gemäß Fig. 2, 3 einfach passende Muttern 9 eingepreßt werden. Ebenfalls beim Preßvorgang mit ausformbar ist dabei ein nach innen gekröpfter Rand 12 am Ringkragen 8 der Deckplatte 3, wie aus Fig. 2 erkennbar. Ggf. kann die Mutter 9 an der Deckplatte 3 natürlich auch eine Schweißstellenfixierung erhalten, damit sich diese Mutter 9 bei Belastung nicht nach unten durchdrücken kann, sofern für die Lastaufnahme der Preßsitz der Mutter 9 im Ringkragen 8 nicht ausreichen sollte.

Das gleiche Prinzip ist auch für die Tragplatte 2 bzw. das Preßteil, wie aus Fig. 3 erkennbar anzuwenden. Da hierbei die Belastung nach oben gerichtet ist, kann eine Sicherung in Form eines abgekröpften Randes nicht vorgesehen worden, und die Mutter 9 wird hierbei einfach durch eine oder mehrere Sehweißstellen gesichert.

Beim Ausführungsbeispiel nach Fig. 4 ist die Gewindespindel 5 ebenfalls aus einer Gewindebüchse 7 gebildet, die die gegenläufigen Gewinde 5', 5" ebenfalls als Innen-und als Außengewinde aufweist. Die Gegengewinde an der Gegenstragplatte 2 und der Deckplatte 3 sind natürlich entsprechend gerichtet. Bei dieser Ausführungsform ist die Tragplatte 2 mit einem in das Gewinde 5" einschraubbaren Gewindezapfen 15 versehen und zwar im Gegensatz zu Fig. 1, bei der dieses Gewinde an einem an der Gegenstandstragplatte mit ausgeformtem Ringkragen 8' direkt eingeschnitten ist.

Fig.5 stellt insofern eine besondere Ausführungsform dar, als hierbei die Gegenstandstragplatte 2 mit einem gegen die Deckplatte 3 bzw. den Grundkörper 4 gerichteten Fortsatz 10 versehen ist, der am Rand 11 der entsprechend formangepaßten Deckplatte 3 vorbeiführt, um den Verstellvorgang nicht zu behindern. Der Fortsatz 10 ist in seiner Höhe H so bemessen, daß er sich in Engststellung der beiden Platten 2, 3 zueinander nicht auf den Boden aufsetzen kann, welche Bedingung dann keiner Beachtung bedarf, wenn der Fortsatz 10 an der Deckplatte 3 nach oben gerichtet angeordnet ist und den Rand der Deckplatte 3 umgreift (nicht dargestellt). Abgesehen von der auch optisch vorteilhaften Gestaltung der Vorrichtung durch einen derartigen Winkelfortsatz 10 hat dieser bei entsprechender Formanpassung der jeweilig anderen Platte den Vorteil, daß sich die beiden Platten auch bei ungünstigsten Umständen nicht zueinander verdrehen können, da die fortsatzfreie Platte vom Fortsatz 10 der anderen Platte daran gehindert wird.

Nur der Vollständigkeit halber ist in Fig.6 eine Draufsicht auf die Gegenstandstragplatte 2 dargestellt. Die Aufsetzfläche der mit Winkelanschlagleiste 1" versehenen Gegenstandstragplatte 2 kann natürlich, wie allgemein üblich, mit einem rutschfesten Belag versehen werden.

**Ansprüche**

1. Höhenverstellbare Aufstell- und Dämpfungsvorrichtung, insbesondere für vibrierende Gegenstände, wie Maschinen, Apparate, Geräte od.dgl. bestehend aus einem elastischen Bodenkörper (4) mit Deckplatte (3), an der eine in eine Gewindeaufnahme einsetzbare und aufgeschraubte Gegenstandstragplatte (2) angeordnet ist, **gekennzeichnet** durch die Kombination der folgenden Merkmale:

    a) die Gegenstandstragplatte (2) ist mit einer Anschlagleiste oder mit einer längs zweier benachbarter Seiten angeordneter Winkelanschlagleiste (1) versehen;

    b) zwischen der Gegenstandstragplatte (2) und der Deckplatte (4) des elastischen Bodenkörpers (4) ist eine Gewindespindel (5) angeordnet;

    c) die Gewindespindel (5) ist in Form einer mit Außengewinde (5') und einem gegenläufigen Innengewinde (5") versehenen Gewindebüchse (7) ausgebildet;

    d) die Gewindespindel (5) ist mit einem Stellelement (6) versehen und

    e) die Gegenstandstragplatte (2) ist in das Innengewinde (5') der Gewindebüchse (7) und diese mit ihrem Außengewinde (5') in die Deckplatte (3) eingeschraubt.

2. Vorrichtung nach Anspruch 1,
    **dadurch gekennzeichnet,**
    daß von der Gegenstandsplatte (2) und der Deckplatte (3) mindestens die Deckplatte (3) als Preßteil ausgebildet und deren Aufnahmegewinde für die Gewindespindel (5) in einen Ringkragen (8) eingeschnitten oder in Form einer Gewindebüchse oder Mutter (9) im Ringkragen (8) mit Festsitz eingepaßt angeordnet ist.

3. Vorrichtung nach Anspruch 1 oder 2,
    **dadurch gekennzeichnet,**
    daß im Randbereich an der Gegenstandstragplatte (2) oder der Deckplatte (3) ein sich gegen die jeweils andere Platte erstreckender Fortsatz (10) und dieser am Rand (11) der anderen Platte vorbeigerichtet angeordnet ist.

**Claims**

1. Vertically adjustable installation and damping device, more particularly for vibrating objects such as machines, apparatus, instruments or the like, comprising a resilient base member (4) having a cover plate (3) which can be inserted and screwed into a threaded recess, characterised by the combination of the following features:

    a) the object carrying plate (2) is provided with an abutment strip or with an angled abutment strip (1") arranged along two adjacent sides;

    b) a threaded spindle (5) is arranged between the object carrying plate (2) and the cover plate (4) of the resilient base member (4);

    c) the threaded spindle (5) is in the form of a threaded bush (7) having an external thread (5') and an oppositely directed internal thread (5");

    d) the threaded spindle (5) is provided with an adjusting element (6) and

e) the object carrying plate (2) is screwed into the internal thread (5') of the threaded bush (7) and the latter is screwed with its external thread (5') into the cover plate (3).

2. Device according to claim 1, characterised in that, of the object carrying plate (2) and the cover plate (3), the cover plate (3) at least is constructed as a pressed part and its thread for receiving the threaded spindle (5) is provided cut into an annular collar (8) or in the form of a threaded bush or nut (9) fitted tightly in the annular collar (8).

3. Apparatus according to claim 1 or 2, characterised in that, in the edge region of the object carrying plate (2) or the cover plate (3), there is provided an extension piece (10) extending towards the other plate and this extension piece is directed past the edge (11) of said other plate.

**Revendications**

1. Dispositif formant support antivibratile réglable en hauteur, notamment destiné à des objets vibrants, tels que des machines, appareils, appareillages ou objets similaires, et se composant d'un corps élastique d'appui au sol (4), avec une plaque de recouvrement (3) sur laquelle est disposée une plaque support d'objet (2) pouvant être montée et vissée dans un logement fileté, caractérisé par la combinaison des particularités suivantes :
   a) la plaque support d'objet (2) est munie d'une baguette de butée ou d'une baguette de butée coudée (1") s'étendant le long de deux côtés voisins;
   b) entre la plaque support d'objet (2) et la plaque de recouvrement (3) du corps élastique d'appui au sol (4) est agencée une broche filetée (5);
   c) la broche filetée (5) est réalisée sous la forme d'une douille filetée (7) pourvue d'un filetage extérieur (5') et d'un filetage intérieur (5") de sens opposé;
   d) la broche filetée (5) est munie d'un élément d'actionnement de réglage (6), et
   e) la plaque support d'objet (2) est vissée dans le filetage intérieur (5') de la douille filetée (7) elle-même vissée dans la plaque de recouvrement (3), par son filetage extérieur (5').

2. Dispositif selon la revendication 1, caractérisé en ce que de la plaque support d'objet (2) et de la plaque de recouvrement (3), au moins la plaque de recouvrement (3) est réalisée sous la forme d'une pièce emboutie à la presse, et son filetage de réception pour la broche filetée (5) est usiné dans une collerette (8) ou est réalisé sous la forme d'une douille taraudée ou d'un écrou (9) monté à force dans la collerette (8).

3. Dispositif selon la revendication 1 ou 2, caractérisé en ce que dans la zone de bordure sur la plaque support d'objet (2) ou sur la plaque de recouvrement (3), est agencé un prolongement (10) s'étendant respectivement en direction de l'autre plaque et au-devant du bord (11) de cette autre plaque.

Fig.1

Fig.2

Fig.3

Fig.6

Fig.4

Fig.5